# EUROPEAN PATENT SPECIFICATION

(11) **EP 1 081 272 B1**
(45) Date of publication and mention of the grant of the patent: **13.10.2004**
(21) Application number: 00118814.3
(22) Date of filing: 31.08.2000
(51) Int. Cl.: D06M 15/643, C08L 83/08, C08G 77/26

(54) **Fiber treatment composition containing amine, polyol, amide-functional siloxanes**
Faserbehandlungsmittel enthaltend Siloxane mit Amin-, Polyol- und Amid-Funktionalität
Compositions pour le traitement des fibres contenant des siloxanes a fonctions amine, polyol et amide

(30) Priority: 02.09.1999 US 389141; 02.09.1999 US 389143
(43) Date of publication of application: 07.03.2001
(73) Proprietor: DOW CORNING CORPORATION, Midland Michigan 48686-0994 (US); Dow Corning Limited, S. Glamorgan, CF63 2YL (GB)
(72) Inventor: Evans, Martin John, Mid-Glamorgan, S. Wales, CF36 3HR (GB); Griffin, Howard Edwin, Greensboro, North Carolina 27406 (US); Kennan, Linda Denise, Midland, Michigan 48640 (US); Zimmermann, Kenneth Edward, Midland, Michigan 48640 (US); Skinner, Michael Ward, Midland, Michigan 48640 (US)
(74) Representative: Sternagel, Fleischer, Godemeyer & Partner Patentanwälte

(56) References cited:
- US-A- 5 100 991
- US-A- 5 258 451

## Description

This invention relates to an amine, polyol, amide-functional siloxane copolymer and a method for its preparation. More particularly, this invention relates to an amine, polyol, amide-functional siloxane copolymer that is suitable for use in fiber treatment compositions.

According to a further aspect the invention relates to a fiber treatment composition that provides the fiber with hydrophilicity, softness and resistance to yellowing. More particularly, this invention relates to a fiber treatment composition containing amine, polyol, amide-functional siloxanes.

There is a growing need in the textile market for siloxane fabric softeners that not only provide softening but also impart hydrophilicity and other desirable properties to the treated fabric. Using a conventional siloxane polymer as the active ingredient in a fabric treatment agent often requires a trade-off in properties.

Amine-functional polysiloxanes are known to improve the hand of textiles. 'Hand' means the softness and smoothness of the textile. The hand of a treated textile is directly related to the amine content (e.g., the number of amino-functional groups) of the polysiloxane. Generally, as the amine content increases, the hand of the textile improves.

One method to produce amine-functional siloxane compounds for use as fabric treatment agents is to react an epoxy-functional silicone with an amine-functional organic compound. This method is described in U.S. Patent 4,409,267 which discloses a fabric treatment composition. The organopolysiloxane is prepared by a process comprising: 1) reacting a silanol-functional organopolysiloxane with a polyoxyalkylene compound and an epoxy-functional compound, by addition reaction and thereafter 2) reacting an amine compound with the epoxy group of the epoxy-functional organopolysiloxane. The reactions are typically carried out in the presence of a solvent. The solvent and any impurities formed during reaction must then be removed. This method suffers from the drawback that unsubstituted amine groups can be present, which cause yellowing when the organopolysiloxane is applied to fabrics.

U.S. Patent 5,593,611 discloses a fabric treatment composition comprising an aminopolysiloxane. The aminopolysiloxane is prepared by hydrolyzing and condensing an amino-functional dialkoxysilane with water in the presence of heat and a base catalyst. The aminopolysiloxane is hydrophobic and has a molecular weight of at least 30,000.

U.S. Patent 4,757,121 discloses a fiber softening composition for synthetic fibers. The composition contains a combination of 2 different amino-substituted organopolysiloxanes, an epoxy- substituted alkoxysilane and a monoepoxy compound. The first amino-substituted organopolysiloxane is terminated with a hydroxy group or alkoxy group that reacts with the epoxy-containing alkoxysilane. This forms a film of a crosslinked composition on the fiber surface. The second amino-substituted alkoxysilane is trialkyl-silyl terminated and the second organopolysiloxane is prepared by reacting an amino-containing organopolysiloxane with a liquid organic epoxy compound

U.S. Patent 4,680,366 discloses a fabric finishing agent containing an organopolysiloxane with primary and secondary amine-functional hydrocarbon groups and polyoxyalkylene groups. The organopolysiloxane can be emulsified in water and applied to fabric to provide softness and anti-static properties. The organopoly-siloxane is prepared by reacting a polyoxyalkylene glycidyl ether with an amino-functional organopoly-siloxane.

However, the amine-functional polyorganosiloxanes suffer from the drawback that as the amine content of the polyorganosiloxane increases, the tendency of the textile to discolor or yellow increases. Additionally, the amine-functionality tends to impart hydrophobicity to the treated textile.

To minimize yellowing, it has been the practice in the textile industry to impart softness to a textile by applying a modified polysiloxane, which contains amide groups or carbamate groups instead of amine groups. However, amide and carbamate groups do not provide the same desirable level of softness characteristic of the amine groups.

For example, another method for producing amine-functional siloxanes for use in fabric treatment agents is disclosed in "Structure Activity Relationships of Aminofunctional Siloxanes as Components in Softening Finishes", Textile Chemist and Colorist, by Lautenschlager et al., published March 1995, Vol. 27, No. 3. Lautenschlager et al. disclose that epoxidation is not a viable alternative to an improved softener because of impurities formed during the reaction. Alternatively, Lautenschlager et al. disclose acylated aminofunctional silicones that can be used in fabric softening finishes, and a method for their preparation by acylation of an aminofunctional silicone fluid. The acylating agent can be an anhydride, lactone or carbonate. However, the resulting acylated aminofunctional silicones exhibit a decline in hand when compared to standard aminosiloxanes

Therefore, it is an object of this invention to provide an amine, polyol, amide-functional siloxane copolymer or a blend of siloxanes having amine, polyol and amide-Functional groups in fiber treatment compositions.

U.S. Patent 5,100,991 discloses compounds that can be used in fabric treatment compositions. The compounds are prepared by reacting an aminofunctional silane or siloxane with a lactone.

U.S. Patent 5,118,535 discloses a method for treating fibrous materials comprising applying a composition containing a cyclic diamine functional polydiorganosiloxane. The composition can be a solution, dispersion or emulsion.

EP A2 0 399 706 discloses a method for treating fibrous materials. The method comprises pre-reacting an amine-containing organosiloxane with a monoepoxide, and thereafter applying the resulting product to the fibers. The product has primary, secondary and tertiary amine groups, where up to 10% of the amine groups are primary amine groups.

U.S. Patent 4,311,626 discloses a composition containing an aminofunctional polydiorganosiloxane and a carboxylfunctional polydiorganosiloxane. The composition is used to treat fibers to impart smoothness, crease resistance, elongation recovery and compression recovery. However, carboxyl groups detrimentally affect the hand of the treated fibers.

U.S. Patent 4,366,001 discloses a fiber treating composition that contains at least 2 of 3 types of organofunctional siloxanes. The first is an amino-functional siloxane, the second is a carboxyl-functional siloxane and the third is an epoxy-functional siloxane. At least one of the organofunctional siloxanes contains at least one polyoxyalkylene group. The composition provides antistatic character, moisture absorbability, stain resistance, pliability, smoothness and compression recovery.

However, none of these references disclose a fiber treatment composition that imparts hydrophilicity and provides resistance to yellowing to textile fibers, without a detriment to hand. Therefore, it is a further object of this invention to provide a fiber treatment composition that provides all of these desired properties. It is a further object of the present invention to provide a functional siloxane copolymer that imparts the above advantageous properties to a fiber treatment composition.

This invention relates to a fiber treatment composition containing siloxanes having amine-, polyol and amide-functionalities. The combination of amine, polyol and amide-functionalities provides a synergistic effect in that the fiber treatment composition provides resistance to yellowing and provides hydrophilicity to the treated fiber without significant detriment to the hand of the fiber.

This invention relates to a fiber treatment composition. The composition comprises active ingredient (A), which is selected from (I) a combination comprising
(a) an amine, polyol-functional siloxane, and (b) a polyol, amide-functional siloxane; and (II) an amine, polyol, amide-functional siloxane copolymer.

Furthermore this invention relates to an amine, polyol, amide-functional siloxane copolymer

Component (a), the amine, polyol-functional siloxane, has an average formula: 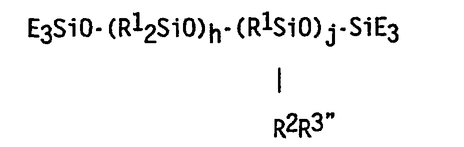 wherein each E is independently selected from a monovalent hydrocarbon group, a hydroxyl group or an alkoxy group; each R¹ is independently a monovalent hydrocarbon group; each R² is independently a divalent hydrocarbon group having 1 to 10 carbon atoms; h is 25 to 1,000; and j is 0.1 to 200. Each R^{3''} is a heterocyclic nitrogen-containing group including 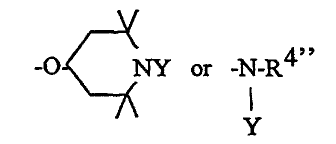 wherein each R^{4''} is independently selected from a hydrogen atom, a monovalent hydrocarbon group or a group of formula -R²NY₂, each Y is independently a hydrogen atom or Y', with the proviso that not all Y = hydrogen, and each Y' is a group of the formula

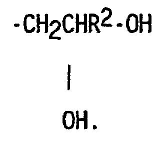

Each E is an endblocking group independently selected from monovalent hydrocarbon groups, hydroxyl groups or alkoxy groups. The selection of endblocking groups depends on the method used to make component (i) the amine- functional siloxane, infra, used to prepare (A) the active ingredient of the composition. The monovalent hydrocarbon groups suitable as endblocking group E are monovalent hydrocarbon groups, preferably alkyl or aryl groups. When the endblocking group E is an alkoxy group, it preferably has 1 to 18 carbon atoms.

Each R¹ is independently a monovalent hydrocarbon group. R¹ is exemplified by alkyl such as methyl, ethyl, propyl, butyl, pentyl and hexyl; aryl such as phenyl, tolyl and xylyl; and aralkyl such as benzyl and phenethyl. Alkyl groups are preferred, and methyl is particularly preferred.

Each R² is independently a divalent hydrocarbon group of 1 to 10 carbon atoms. The divalent groups are exemplified by alkylene groups such as ethylene, propylene, butylene, isobutylene and methylpropylene; and alkylene-arylene groups expressed by the formula -(CH₂)₂-C₆H₄. Alkylene groups such as ethylene, propylene and isobutylene groups are preferred.

Preferably, R¹ is an alkyl group such as methyl, R² is an alkylene group such as isobutyl, h is 75 to 400, and j is 0.75 to 20.

Preferably, Y' is

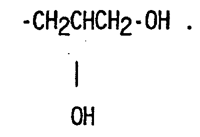

Component (a) the amine, polyol -functional siloxane can be prepared by methods such as the method disclosed in EP AZ 0 399 706 A2, published on November 28, 1990. This method comprises reacting an amine-functional siloxane with an epoxy-functional compound.

More preferably, (a) the amine, polyol-functional siloxanes used in this invention are prepared by the following method. First, component (i) an amine-functional siloxane is prepared by base equilibration using a catalyst known in the art. A preferred method comprises heating to 150°C., a composition comprising a polydiorganosiloxane; an endblocker, such as hexamethyldisiloxane; an amine-functional silane or amine-functional siloxane; and water in the presence of the catalyst. While heating, a mild strip is applied to the system to remove by-products such as water and alcohol. After formation of component (i), the reaction mixture can be stripped to remove low boiling impurities from component (i).

In a particularly preferred embodiment of the invention, component (i) is formed by a condensation reaction process. The condensation reaction process comprises I) heating a mixture comprising silanol-endblocked polydimethylsiloxane, an alcohol and an aminosilane, in the presence of a catalyst, and thereafter II) gradually reducing pressure to promote condensation polymerization by removing by-products from the reaction mixture.

The alcohol is preferably a blend of linear alcohols having 10 to 15 carbon atoms. Suitable alcohols are commercially available.

The catalyst used in step I) may be, e.g., barium hydroxide, trisodium orthophosphate and combinations thereof. The mixture in step I) is preferably heated to 85° to 120°C. for a period of 1 to 5 hours.

The by-products formed in step II) are water and alcohol. Pressure in step II) is preferably reduced to 600 mBar to 200 mBar. After the viscosity of the product of step II) is stabilized, pressure is returned to ambient and the product is cooled in an inert atmosphere.

Component (i) the amine-functional siloxane has the average general formula: 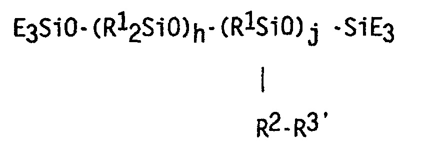 where R¹, R², h and j are as described above, with h preferably being from 75 to 400. R^{3'} is a heterocyclic nitrogen-containing group 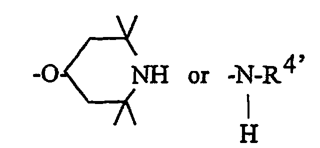 where each R^{4'} is selected from a hydrogen atom, a monovalent hydrocarbon or a group of the formula -R²NH₂.

When (i) the amine-functional siloxane is prepared by the base equilibration process, each E is a monovalent hydrocarbon group, preferably an alkyl or aryl group. When the amine-functional siloxane is prepared by the condensation reaction process, each E is independently selected from monovalent hydrocarbon groups, hydroxyl groups or alkoxy groups.

The amine-functional siloxane (i) is then reacted with (ii) an epoxy-functional compound to form (a) the amine, polyol -functional siloxane, described above.

Component (ii) is an epoxy-functional compound having a general formula: 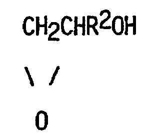 where R² is a divalent hydrocarbon group as described above. Suitable epoxy-functional compounds for component (ii) include glycidol, 2,3-epoxy-cyclopentanol and 3,3-epoxy-6-methylcyclohexylmethanol. Glycidol is preferred.

Component (b) is a polyol, amide-functional siloxane having an average general formula: 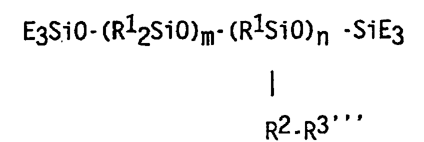 wherein E, R¹ and R² are as described above, m is 25 to 1,000, and n is 0.1 to 200. Each R^{3'''} is a heterocyclic nitrogen-containing group including 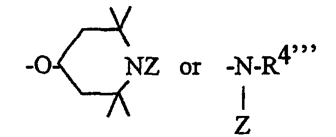 where each R^{4"'} is independently selected from a hydrogen atom or a group of formula -R²NZ₂, each Z is selected from a hydrogen atom or Z', with the proviso that not all Z = hydrogen, and Z' is a group of the formula 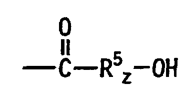 where each R⁵ is a divalent hydrocarbon group of 1 to 7 carbon atoms and z is an integer from 1 to 7 inclusive.

Preferably, R¹ is an alkyl group such as methyl, R² is an alkylene group such as isobutyl, m is 75 to 400, and n is 0.1 to 20. Preferably Z' is

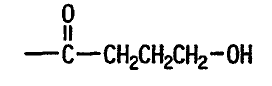

The polyol, amide-functional siloxane (II) is preferably produced by reacting (i) an amine-functional siloxane, as described above, with (iii) a material selected from lactones. The polyol, amide-functional siloxane is preferably produced by the method disclosed in U.S. Patent 5,100,991. The preferred method comprises reacting (i) an amine functional siloxane with (iii) a lactone.

However, lactones are preferred as component (iii). Suitable lactones are disclosed in U.S. Patent 5,100,991. Suitable lactones have the formula 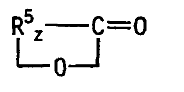 where R⁵ and z are as described above. Preferably, each R⁵ represents a group with 1 carbon atom and z is 3 to 6. The lactone is exemplified by butyrolactone, epsilon caprolactone, and delta gluconolactone. Butyrolactone and epsilon caprolactone are particularly preferred.

In the textile treatment composition of the present invention component a) as defined above is preferably present in an amount of 50 - 99 percent by weight, more preferred 80 - 98 percent by weight, most preferred 85 - 95 percent by weight and component b) as defined above is preferably present in an amount of 1 - 50 percent by weight, more preferred 2 - 20 and most preferred 5 - 15 percent by weight, all percentages are based on the total weight of component a) and b).

In an alternative embodiment of the invention, (A) the active ingredient comprises ingredient (II), an amine, polyol, amide-functional siloxane copolymer. The copolymer has the average general formula: 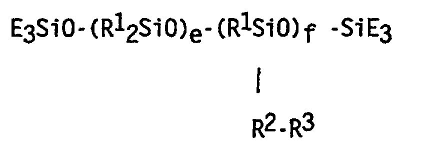 where each E is independently selected from monovalent hydrocarbon groups, hydroxyl groups or alkoxy groups; each R¹ is independently a monovalent hydrocarbon group; each R² is independently a divalent hydrocarbon group having 1 to 10 carbon atoms: each R³ is a heterocyclic nitrogen- containing group including 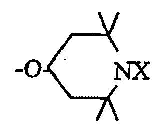 or a nitrogen-containing group 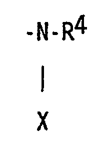 where each R⁴ is independently selected from a hydrogen atom, a monovalent hydrocarbon or a group of formula -R²NX₂, where each X is independently a hydrogen atom or X', with the proviso that not all X = hydrogen, and each X' is independently selected from groups of the formula 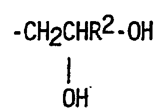 or groups of the formula 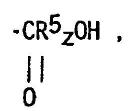 with at least one of each of the above X' alternatives being present, where each R² is as described above, each R⁵ is independently a divalent hydrocarbon group of 1 to 7 carbon atoms, z is an integer from 1 to 7; e is 25 to 1,000; and f is 0.1 to 200. Preferably, e is 75 to 400, and f is 0.85 to 20. Preferably, the amount of X and X' represented by groups of the formula 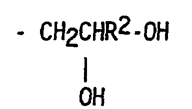 is 0.1 to 2.9 mol%, more preferred 0.9 to 2.1 mol%, of the copolymer molecule. Preferably, the amount of X and X' represented by groups of formula 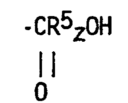 is 0.01 to 2.9 mol%, more preferred 0.01 to 0.05 mol%, of the copolymer molecule.

Each R¹ is independently a monovalent hydrocarbon group. R¹ is exemplified by alkyl such as methyl, ethyl, propyl, butyl, pentyl and hexyl; aryl such as phenyl, tolyl and xylyl; and aralkyl such as benzyl and phenethyl. Alkyl groups are preferred and methyl is particularly preferred.

Each R² is independently a divalent hydrocarbon group of 1 to 10 carbon atoms. The divalent groups are exemplified by alkylene groups such as ethylene, propylene, butylene, isobutylene and methylpropylene; and alkylene-arylene groups expressed by the formula -(CH₂)₂-C₆H₄. Alkylene groups such as ethylene, propylene and isobutylene groups are preferred.

Each E is independently selected from monovalent hydrocarbon groups, hydroxyl groups or alkoxy groups. Preferably, the alkoxy groups have 10 to 15 carbon atoms.

Each R⁵ is independently a divalent hydrocarbon groups of 1 to 7 carbon atoms, and z is an integer from 1 to 7. R⁵ is exemplified by ethylene, propylene, butylene and isobutylene.

Preferably, the group represented by general formula 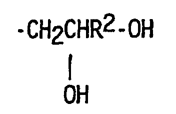 is

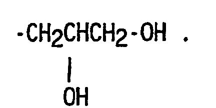

Preferably, the group represented by general formula 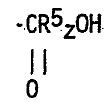 is

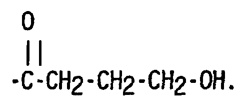

The amine, polyol, amide-functional siloxane copolymer can be prepared by reacting
(i) the amine-functional siloxane described above;
(ii) the epoxy-functional compound described above; and
(iii) the material selected from lactones, described above.

Preferably, the amount of component (i) is 90 to 99 wt%, the amount of component (ii) is 0.5 to 9 wt%, and the amount of component (iii) is 0.1 to 5 wt%. The copolymer is preferably prepared by heating components (i), (ii) and (iii) to 80 to 115°C. for several hours.

The copolymer can be prepared by reacting (i) the amine-functional siloxane with (ii) the epoxy-functional compound and (iii) the material selected from lactones; where components (i), (ii), and (iii) are combined at the same time, to produce the amide and polyolfunctionalities of the siloxane copolymer in one step. Preferably, components (i), (ii), and (iii) are heated to 80 to 100°C. for several hours to prepare the copolymer by this method.

Alternatively, the copolymer can be prepared by the steps of:
(1) reacting (i) the amine-functional siloxane with (ii) the epoxy-functional compound; yielding a reaction product that is an amine, polyol-functional siloxane; and thereafter
(2) reacting the reaction product of (i) and (ii) with (iii) the material selected from lactones; yielding an amine, polyol, amide-functional siloxane copolymer. (Also, the copolymer can be prepared by reacting the reaction product of (i) and (iii) with (ii)).

When the copolymer is prepared by this method, components (i) and (ii) are preferably heated to 80 to 115°C. for several hours. The reaction product of (i) and (ii) is then reacted with component (iii) by heating at 100°C. for several hours.

Preferably, the amine, polyol-functional siloxane of step (1) is prepared by reacting (i) the amine-functional siloxane with (ii) the epoxy-functional compound to form the amine, polyol-functional siloxane reaction product of step (1). This method is exemplified in European Patent Application No. 0 399 706 A2, published on November 28, 1990.

The amine, polyol-functional siloxane reaction product formed in step (1) has the average general formula: 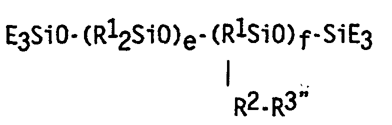 where R¹, R², E, e and f are as described above, and each R^{3''} is a heterocyclic nitrogen-containing group including 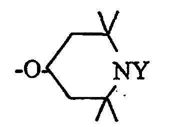 or a nitrogen-containing group 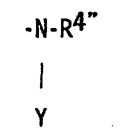 where each R^{4''} is selected from a hydrogen atom or a group of formula -R²NY₂, where each Y is independently a hydrogen atom or Y', each Y' is a group of the formula 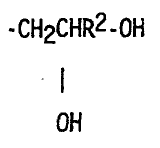 where each R² is a divalent hydrocarbon group as described above.

In step (2), the amine, polyol-functional siloxane reaction product is then reacted with (iii) the material selected from lactones described above. Preferably, a lactone is reacted with the amine, polyol-functional siloxane to produce the amine, polyol, amide-functional siloxane copolymer. A preferred method for forming an amide-functional group by reaction of an amine-functional group with a lactone can be found in U.S. Patent 5,100,991.

The fiber treatment composition comprises active ingredient (A), as described above. Active ingredient (A) may further comprise (III) an organic fiber treatment compound, (IV) an organosiloxane fiber treatment compound, e.g., dimethylsilicone or organofunctional silicone and combinations thereof.

The fiber treatment composition may further comprise one or more optional ingredients. For example, the following optional ingredients can be added to the fiber treatment composition: (C) one or more surfactants when the fiber treatment composition is an emulsion, (D) an organic acid, (E) a thickener, (F) a crease resist resin, (G) an oil soluble colorant, (H) a water soluble colorant, and combinations thereof.

Ingredient (B) is a carrier selected from water, organic solvents or low molecular weight silicones. Suitable organic solvents include hydrocarbons such as aromatic hydrocarbons exemplified by toluene, benzene and xylene; alkanes exemplified by hexane and heptane; ketones exemplified by acetone, methyl ethyl ketone and methylisobutyl ketone; and alcohols. Ingredient (B) is preferably water.

Ingredient (C) is selected from cationic or nonionic surfactants. Nonionic surfactants are preferred. The amount of ingredient (C) is preferably 3 to 25 wt% of the emulsion.

The emulsion can further comprise optional ingredient (D), an organic acid. Ingredient (D) is preferably glacial acetic acid. The amount of ingredient (D) in the emulsion preferably ranges from greater than 0 to 2 wt% of the emulsion.

The fiber treatment composition can have any suitable form. For example, the composition can be applied to the fibers neat. However, the fiber treatment composition can be a solution, dispersion or emulsion. Preferably, the fiber treatment composition is an emulsion comprising:
i) a discontinuous phase comprising active ingredient (A),
ii) a continuous phase comprising ingredient (B), and
iii) ingredient (C), a surfactant. Ingredient (D), an organic acid, is preferably added to the emulsion. The amount of active ingredient (A) in the emulsion is preferably 5 to 50 wt%. More preferably, the active ingredient (A) is 10 to 20 wt% of the emulsion. A method for the preparation of an emulsion of an organopoly-siloxane is disclosed in U.S. Patent 5,258,451.

This invention further relates to a method for preparing a fiber treatment composition. The method comprises combining active ingredient (A) with ingredient (B) and any other optional ingredients. Preferably, active ingredient (A) and ingredient (B) are combined by a process selected from dissolving, dispersing or emulsifying.

When active ingredient (A) contains more than 1 component, the fiber treatment composition can be prepared by independently combining each component separately with optional ingredients to form a plurality of treatment agents. The plurality of treatment agents can then be combined before application to the fibers, or they can be applied to the fibers simultaneously or sequentially. For example, when a combination of components (a) and (b) is used as the active ingredient (A), the fiber treatment composition can be prepared by forming (1) a first treatment agent comprising component (a) and ingredient (B) and (2) a second treatment agent comprising component (b) and ingredient (B). Preferably, (1) the first treatment agent and (2) the second treatment agent are both emulsions, ingredient (B) is water, and (1) the first treatment agent further comprises a first surfactant and (2) the second treatment agent further comprises a second surfactant. Treatment agents (1) and (2) can then be mixed together and thereafter applied to the fibers. Alternatively, treatment agent (1) can be applied to the fibers, and thereafter treatment agent (2) can be applied to the fibers. Alternatively, treatment agent (2) can be applied to the fibers, and thereafter treatment agent (1) can be applied to the fibers.

This invention further relates to a method for treating fibers. The method comprises applying the fiber treatment composition to the fibers and thereafter removing the carrier, if any. The fiber treatment composition can be applied to the fibers by any convenient method. For example, the composition can be applied by padding, dipping or spraying. When the fiber treatment composition comprises more than 1 solution, dispersion or emulsion, the solutions, dispersions and emulsions can be applied simultaneously or sequentially to the fibers.

The fiber treatment composition can be applied to the fibers during making the fibers, during making a fabric from the fibers or later, such as during laundering the fabric. After application, the carrier can be removed from the fiber treatment composition by, for example, drying at ambient or elevated temperature.

The amount of fiber treatment composition applied to the fibers is preferably sufficient to provide 0.1 to 15 wt% of the active ingredient on the fibers, based on the dry weight of the fibers. More preferably, the amount of active ingredient on the fibers is 0.2 to 1 wt% based on the dry weight of the fibers.

The fibers that can be treated with the composition described above are not specifically restricted. Suitable fibers include natural fibers such as cotton, silk, linen and wool; regenerated fibers such as rayon and acetate; synthetic fibers such as polyesters, polyamides, polyacrylonitriles, polyethylenes, polypropylenes; and combinations and blends thereof.

The form of the fibers is not specifically restricted. The fiber treatment composition is suitable for use on threads, filaments, tows, yarns, woven fabrics, knitted materials, nonwoven materials, and others.

The fiber treatment composition of this invention has the following advantages:
1. the composition imparts hydrophilicity to the fibers.
2. the composition provides yellowing resistance to the fibers, and
3. the composition provides an improvement to hand without significant detriment to hydrophilicity and yellowing resistance. 'Hand' means the softness and smoothness of the fabric. The amine-functional groups provide superior hand to the fabric. The polyol and amide functionalities provide hydrophilicity and resistance to yellowing.

### Reference Example 1

### Emulsion samples were prepared by the following method.

1. The active ingredient was combined with 2 surfactants and a first charge of acid, and this mixture was stirred for 15 minutes. The surfactants used were GENAPOL® UD 050 and GENAPOL® UD 110. GENAPOL® UD 050 and GENAPOL® UD 110 are ethoxylated C11 branched and linear alcohols having CAS No. 127036242, available from Hoechst Celanese. The acid was glacial acetic acid.
2. A first water charge was added to the mixture from step 1, and the resulting mixture was stirred for 30 minutes.
3. A second water charge was added to the mixture from step 2 and the resulting mixture was stirred for 30 minutes.
4. A third water charge was added to the mixture from step 3 and the resulting mixture was stirred for 30 minutes.
5. A second acid charge and a fourth water charge were added to the mixture from step 4. The resulting mixture was stirred for 1 hour.

The formulation of the emulsion samples is in Table 1. The emulsion samples were formulated to provide 1 wt% of the active ingredient on the fiber to which the emulsion was applied.

**Table 1 -**

| Emulsion Formulation | |
|---|---|
| Ingredient | Amount (Weight % based on total weight of the emulsion) |
| Active Ingredient | 20 |
| GENAPOL® DU 050 | 3 |
| GENAPOL® DU 110 | 7 |
| 1 ^{ST} Acid Charge | 0.1 |
| 1 ^{ST} Water Charge | 4 |
| 2 ^{ND} Water Charge | 4 |
| 3 ^{RD} Water Charge | 41.9 |
| 4 ^{TH} Water Charge | 19.8 |
| 2 ^{ND} Acid Charge | 0.2 |

### Reference Example 2 - Evaluation of Emulsion Samples

Each emulsion sample was then applied to 100% cotton interlock knit fabric (TESTFABRICS®style #460). The treated fabric was dried and cured at 150°C for 3 minutes. The treated fabric was then conditioned at room temperature overnight.

The whiteness index, hand and absorbency were then measured on each sample. Whiteness index is a dimensionless number computed from colorimetric data. Whiteness index was determined by averaging the results of 3 readings per sample with a HUNTERLAB® colorimeter, as described in ASTM E 313-96.

Hand is a relative measurement provided by a panel of experienced evaluators. Hand of each sample is ranked on a scale of 1 to X, X being the number of samples evaluated relative to each other. A rating of 1 indicates the best hand, i.e. softest and smoothest feel, and higher numbers indicate decreasing hand.

Absorbency is measured by AATCC (American Association of Textile Chemist and Colorist) Test Method 79-1995-Absorbance of Bleached Textiles. This method is: A drop of water is allowed to fall from a fixed height onto the taut surface of a fabric test specimen. The time required for the specular reflection of the water drop to disappear is measured and recorded as wetting time. Absorbency was measured after conditioning at room temperature overnight. In some examples, absorbency was measured again 1 week later, and again 1 month later.

### Example 1

Hydroxy-terminated dimethylsiloxane having a viscosity of 70 cSt (0.00007 m²/s) at 25°C. (216.07g), aminoethylaminoisobutylmethyldimethoxysilane (14.08g), polydimethylsiloxane fluid having a viscosity of 15 cSt (0.000015 m²/s) at 25°C. (21.79g), deionized water (5.0g), and hydroxy-terminated dimethylsiloxane with tetrabutyl -phosphonium chloride (2.5g), were combined in a 500 mL flask equipped with a condenser and a Dean Stark trap. This combination was heated at 115°C. for 4 hours, and then heated to 150°C. for 1 hour. The resulting polymer was stripped by heating at 150°C. under full vacuum, and thereafter the stripped polymer was cooled to 80°C.

Glycidol (9.48g) was added to the stripped polymer. The glycidol and polymer were heated to 115°C. for 4 hours. The resulting polymer was cooled to 100°C.

Butyrolactone (0.92g) was added to the polymer. The polymer and butyrolactone were heated at 100°C. for 4 hours, thereby forming Copolymer (1) as shown as active ingredient for sample 1.

### Example 2

Hydroxy-terminated dimethylsiloxane having a viscosity of 70 cSt (0.00007 m²/s) at 25°C. (216.07g). aminoethylaminoisobutylmethyldimethoxysilane (14.08g), polydimethylsiloxane fluid having a viscosity of 15 cSt (0.000015 m²/s) at 25°C. (21.79g), deionized water (5.0g), and hydroxy-terminated with tetrabutylphosphonium chloride dimethylsiloxane (2.5g), were combined in a 500 mL flask equipped with a condenser, and a Dean Stark trap. This combination was heated at 115°C. for 4 hours, and then heated to 150°C. for 1 hour. The resulting polymer was stripped by heating at 150°C. under full vacuum, and the stripped polymer was cooled to 80°C.

Glycidol (9.48g) and butyrolactone (0.92g) were added to the stripped polymer. The glycidol, butyrolactone and polymer were heated to 100°C. for 4 hours thereby forming Copolymer (2) as shown as active ingredient for sample 2.

### Example 3

The evaluated samples were emulsions prepared by the method of Reference Example 1.

Sample 1 contained as active ingredient Copolymer (1), shown in Table 2.

Sample 2 contained as active ingredient Copolymer (2), shown in Table 2.

Sample 3 contained as active ingredient a blend of 99wt% of an amine, polyol-functional siloxane, shown as active ingredient for sample C1 in Table 2 and 1wt% of a polyol, amide-functional siloxane, shown as active ingredient for sample C2 in Table 2.

The samples was applied to a fabric, and whiteness index, hand and absorbency were measured as in Reference Example 2. The results are in Table 3.

### Comparative Example 1

Sample C1 was prepared by the method in Reference Example 1. The active ingredient was an amine, polyol-functional siloxane that was prepared by reaction of dimethylmethyl(aminoethylaminoisobutyl)siloxane with glycidol. The active ingredient is shown in Table 2.

The emulsion was applied to a fabric, and whiteness index, hand and absorbency were measured as in Reference Example 2. The results are in Table 3.

### Comparative Example 2

Sample C2 was prepared by the method of Reference Example 1. The active ingredient comprised a polyol, amide-functional siloxane. The active ingredient is shown in Table 2.

The emulsion was applied to a fabric, and whiteness index, hand and absorbency were measured as in Reference Example 2. The results are in Table 3.

### Comparative Example 3

Sample C3, a sample of untreated 100% cotton knit fabric, was evaluated for absorbency, whiteness index and hand, according to the methods in Reference Example 2. The results are in Table 3.

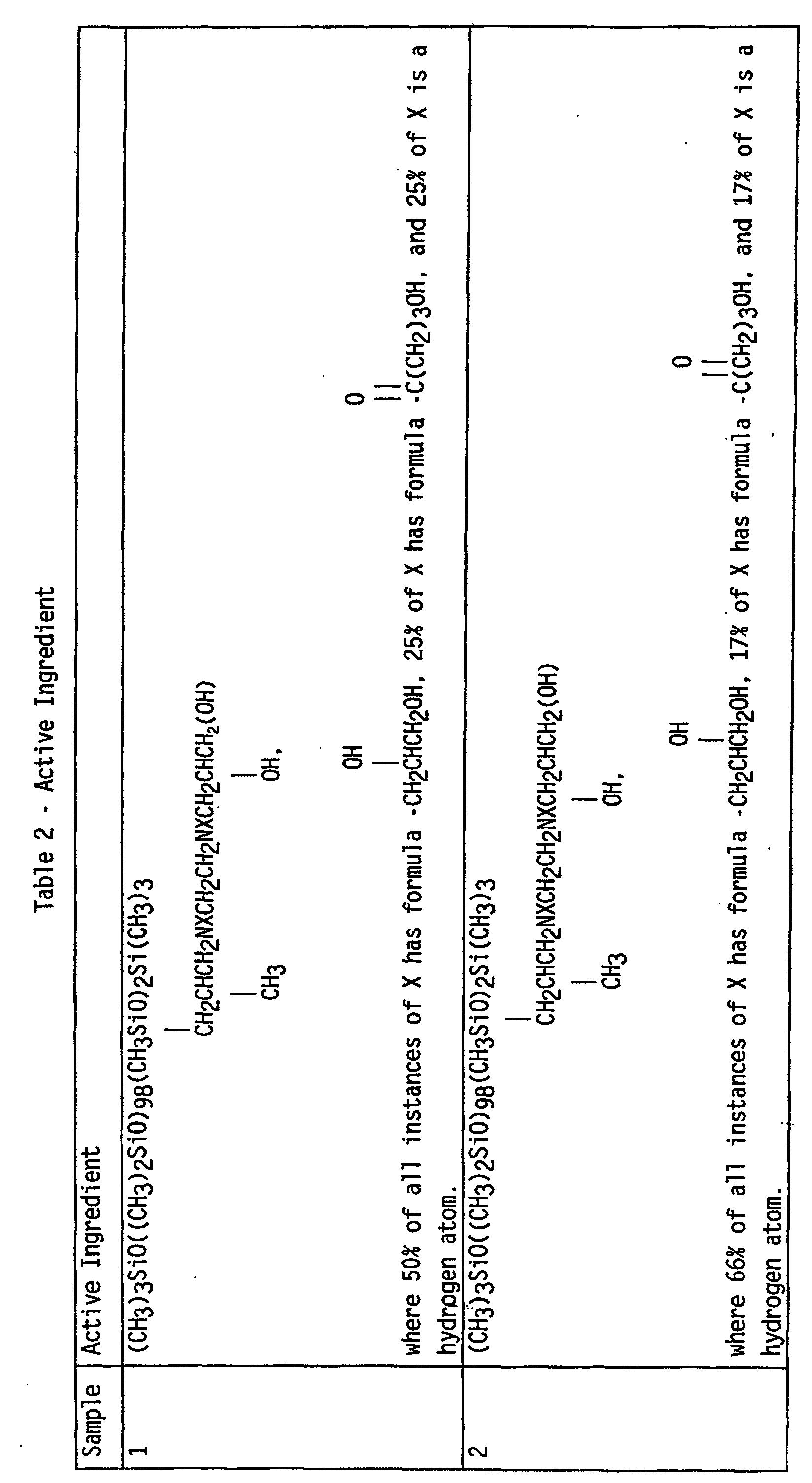

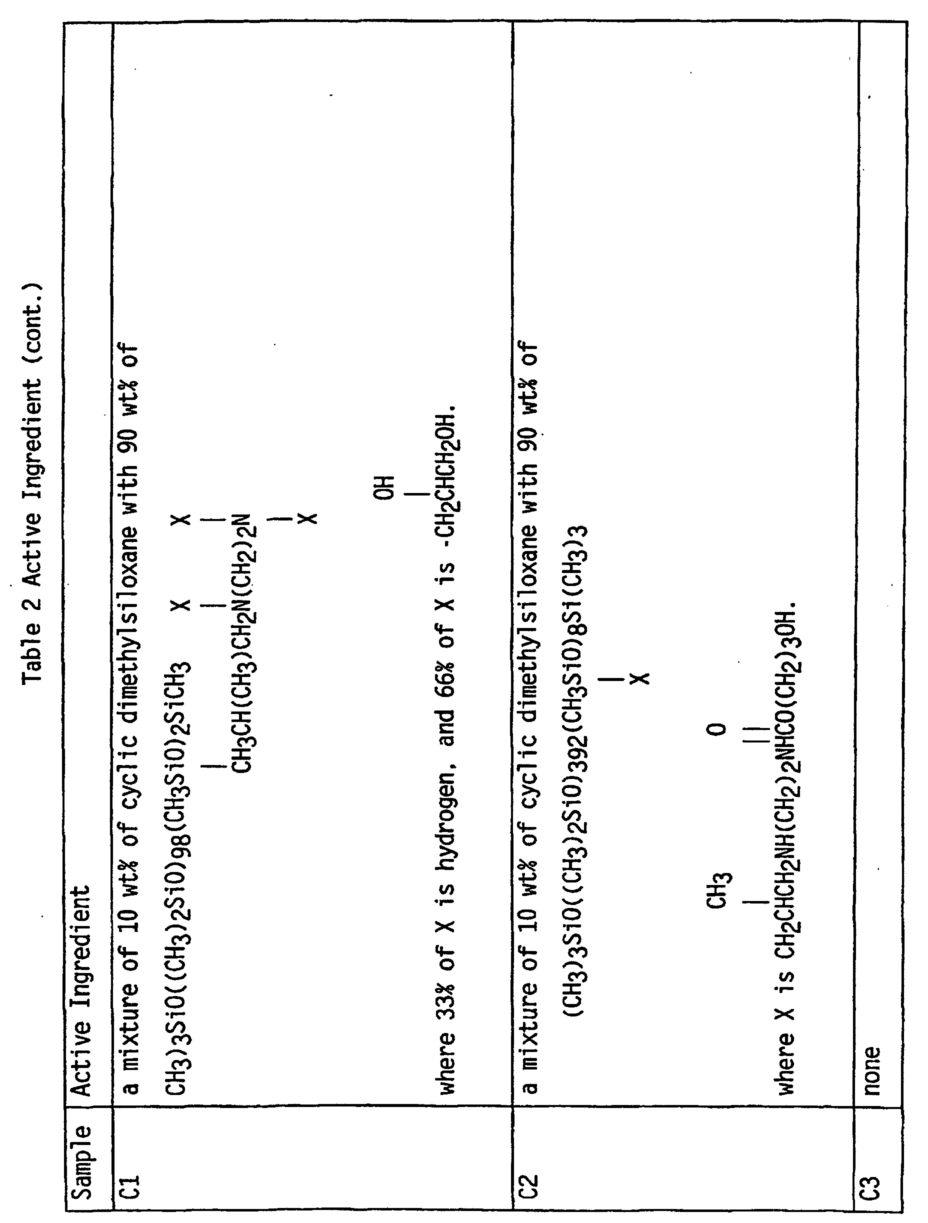

**Table 3 -**

| Water Absorbency, Whiteness Index, and Hand of Each Sample | | | |
|---|---|---|---|
| Sample No. | Whiteness Index | Hand | Absorbency (seconds) |
| 1 | 67.29 | 3 | 3.6 |
| 2 | 66.39 | 2 | 4.0 |
| 3 | 69.78 | 1 | 2.6 |
| C1 | 70.30 | 4 | 1.0 |
| C2 | 71.21 | 5 | < 1 |
| C3 | 72.55 | 6 | Immediate |

Sample 3 shows that when the active ingredient is a combination of an amine, polyol-functional siloxane and a polyol, amide-functional siloxane, good whiteness index, hand and absorbency can be obtained. Sample 3 provided better hand than any other samples. Sample 3 also provided better whiteness index, hand and absorbency than the samples with copolymers as the active ingredient.

Sample 1 shows that compositions with copolymer 1 as the active ingredient provided comparable hand and absorbency to compositions with copolymer 2 as the active ingredient. Sample 2 shows that copolymer 2 provided better hand than either an amine, polyol-functional siloxane alone or a polyol, amide-functional siloxane alone.

Comparative Example 1 shows that an amine, polyol-functional siloxane active ingredient provides poorer hand than the copolymers in samples 1 and 2 and the blend in sample 3. Comparative Example 2 shows that a polyol, amide-functional siloxane provides poorer hand than the copolymers in samples 1 and 2 and the blend in sample 3.

Comparative Example 3 shows that hand is poorest with untreated cotton fabric.

## Claims

1. A fiber treatment composition comprising (A) an active ingredient selected from:
(I) a combination comprising
(a) an amine, polyol-functional siloxane having an average general formula 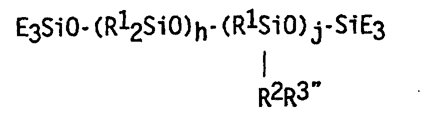 wherein each E is independently selected from a monovalent hydrocarbon group, a hydroxyl group or an alkoxy group; each R¹ is independently a monovalent hydrocarbon group; each R² is independently a divalent hydrocarbon group having 1 to 10 carbon atoms; h is 25 to 1,000; j is 0.1 to 200; and each R^{3"} is a heterocyclic nitrogen-containing group including 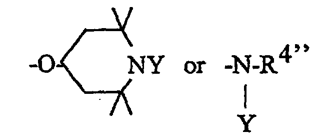 wherein each R^{4''} is independently selected from a hydrogen atom, a monovalent hydrocarbon group or a group of formula -R²NY₂, each Y is independently a hydrogen atom or Y', with the proviso that not all Y = hydrogen, and each Y' is a group of the formula 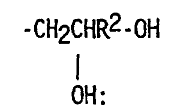 and
(b) a polyol, amide-functional siloxane having an average general formula 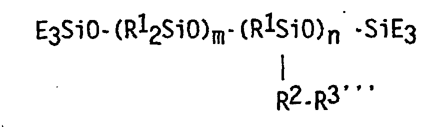
wherein E, R¹ and R² are as described above, m is 25 to 1,000, n is 0.1 to 100; and each R^{3'''} is a heterocyclic nitrogen-containing group including 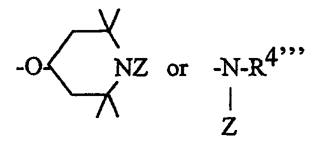 wherein each R^{4'''} is independently selected from a hydrogen atom or a group of formula -R²NZ₂, each Z is selected from a hydrogen atom or Z', with the proviso that not all Z = hydrogen, and Z' is a group having a formula 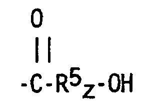 wherein each R⁵ is a divalent hydrocarbon group of 1 to 7 carbon atoms, and z is an integer from 1 to 7 inclusive: or
(II) an amine, polyol, amide-functional siloxane copolymer, wherein the copolymer has the average general formula: 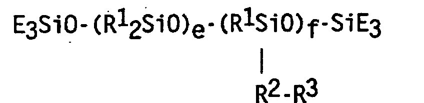 where each E is independently selected from monovalent hydrocarbon groups, hydroxyl groups or alkoxy groups; each R¹ is independently a monovalent hydrocarbon group; each R² is independently a divalent hydrocarbon group having 1 to 10 carbon atoms; each R³ is a heterocyclic nitrogen-containing group including 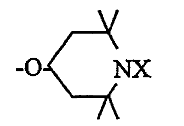 or a nitrogen-containing group 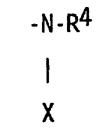 where each R⁴ is independently selected from a hydrogen atom, a monovalent hydrocarbon or a group of the formula -R²NX₂, where each X is independently a hydrogen atom or X', with the proviso that not all X = hydrogen, each X' is independently selected from groups of the formula 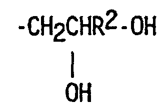 or groups of the formula 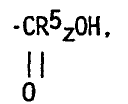 with at least one of each of the above X' alternatives being present, where each R² is as described above, each R⁵ is independently a divalent hydrocarbon group of 1 to 7 carbon atoms, z is an integer from 1 to 7; e is 25 to 1,000; and f is 0.1 to 200; and (B) a carrier.

2. The composition of claim 1 wherein the carrier is selected from water or organic solvents.

3. The composition of claim 2 wherein the composition is selected from a dispersion or an emulsion.

4. The composition of claim 3 wherein the composition is an emulsion, ingredient (B) is water, and the composition further comprises ingredient (C), a surfactant.

5. The composition of claim 4 further comprising greater than 0 to 2 wt%, based on the weight of the emulsion, of ingredient (D), an organic acid.

6. The composition of claim 1 wherein the active ingredient (A) further comprises an optional active ingredient selected from (III) an organic fiber treatment compound, (IV) an organosiloxane fiber treatment compound or combinations thereof.

7. An amine, polyol, amide-functional siloxane copolymer, wherein the copolymer has the average general formula: 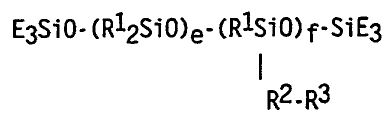 where each E is independently selected from monovalent hydrocarbon groups, hydroxyl groups or alkoxy groups; each R¹ is independently a monovalent hydrocarbon group; each R² is independently a divalent hydrocarbon group having 1 to 10 carbon atoms; each R³ is a heterocyclic nitrogen-containing group including 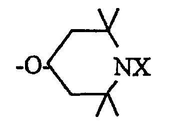 or a nitrogen-containing group 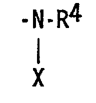 where each R⁴ is independently selected from a hydrogen atom, a monovalent hydrocarbon or a group of the formula -R²NX₂, where each X is independently a hydrogen atom or X', with the proviso that not all X = hydrogen, each X' is independently selected from groups of the formula 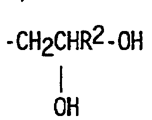 or groups of the formula 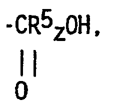 with at least one or eacn or the above X' alternatives being present, where each R² is as described above, each
R⁵ is independently a divalent hydrocarbon group of 1 to 7 carbon atoms, z is an integer from 1 to 7; e is 25 to 1,000; and f is 0.1 to 200.

8. The copolymer of claim 7 wherein the copolymer contains 0.1 to 2.9 mol% of X and X' groups of the formula

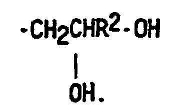

9. The copolymer of claim 7 wherein the copolymer contains 0.01 to 2.9 mol% of X and X' groups of the formula

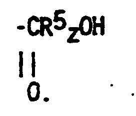

10. The copolymer of claim 7 wherein R¹ is an alkyl group; R² is an alkylene group; each X' is independently selected from 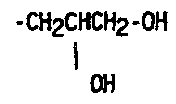 or 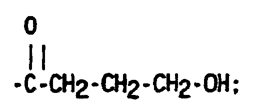 each X is selected from hydrogen and X'; e is 75 to 400, and f is 0.75 to 20.

11. A method for preparing an amine, polyol, amide-functional siloxane copolymer, wherein the method comprises reacting:
(i) an amine-functional siloxane of the average general formula 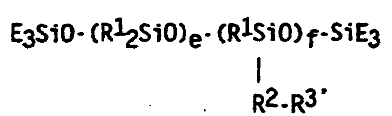 where R¹ is a monovalent hydrocarbon group, R² is a divalent hydrocarbon group having 1 to 10 carbon atoms, each E is independently selected from monovalent hydrocarbon groups, hydroxyl groups or alkoxy groups, e is 25 to 1,000, and f is 0.1 to 200; R^{3'} is a heterocyclic nitrogen-containing group including 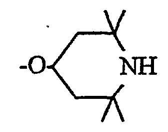 or a nitrogen-containing group 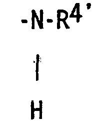 where each R^{4'} is independently selected from a hydrogen atom, a monovalent hydrocarbon or a group of the formula -R²NH₂; and
(ii) an epoxy-functional compound of formula 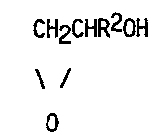 where R² is a divalent hydrocarbon group as described above; and
(iii) a material selected from lactones.

12. The method of claim 11 wherein component (i) is prepared by a base equilibration process comprising:
1) heating a composition comprising a polydiorganosiloxane, hexamethyldisiloxane, an amine compound selected from amine-functional silane or an amine-functional siloxane, and water in the presence of a catalyst; and
2) applying a mild strip to the product of step 1) thereby removing by-products including water and alcohol.

13. The method of claim 11 wherein component (i) is prepared by a condensation reaction process comprising:
I) heating a mixture comprising a silanol-endblocked polydimethylsiloxane, an alcohol and an aminosilane in the presence of a catalyst, and thereafter
II) gradually reducing pressure to promote condensation polymerization by removing by-products from the reaction mixture.

14. The method of claim 11 wherein
1) the amine-functional siloxane (i) is reacted with the epoxy-functional compound (ii) thereby yielding an amine, polyol-functional siloxane; and thereafter
2) the amine, polyol-functional siloxane is reacted with (iii) the material selected from lactones, anhydrides or carbonates.

15. The method of claim 11 wherein (i) the amine-functional siloxane, (ii) the epoxy- functional compound, and (iii) the material selected from lactones are combined and reacted in one step.

16. The method of claim 11 wherein
1) the amine-functional siloxane (i) is reacted with the material selected from lactones (iii) thereby yielding an amine, polyol-functional siloxane; and thereafter
2) the amine, polyol-functional siloxane is reacted with (ii) the epoxy-functional compound.

17. A method for forming a fiber treatment composition, wherein the method is selected from dissolving, dispersing or emulsifying:
(I) a combination comprising
(a) an amine, polyol-functional siloxane as defined in claim 1 and
(b) a polyol, amide-functional siloxane as defined in claim 1 or
(II) an amine, polyol, amide-functional siloxane copolymer as defined in claim 1;
and (B) a carrier ; with the provisos that when the composition is prepared by emulsification, ingredient (B) is water, and ingredient (C) a surfactant is added to the composition.

18. The method of claim 17 wherein active ingredient (A) is a combination of components (a) and (b); the composition comprises a combination of (1) a first treatment agent and (2) a second treatment agent, wherein (1) the first treatment agent is prepared by a method selected from dissolving, dispersing or emulsifying component (a) and ingredient (B), and (2) the second treatment agent is prepared by a method selected from dissolving, dispersing or emulsifying component (b) and ingredient (B).

19. A method for treating fibers comprising:
1) applying to a fiber, a fiber treatment composition according to any of claims 1-6. and thereafter
2) removing the carrier.

20. The method of claim 19 wherein the fiber treatment composition is applied to a fiber in an amount sufficient to provide 0.1 to 15 wt% of the active ingredient (A) on the fiber.

21. A treated fiber obtainable by the method of any of claims 19 and 20.

## Patentansprüche

1. Faserbehandlungszusammensetzung, enthaltend (A) einen aktiven Bestandteil, ausgewählt aus:
(I) einer Kombination, enthaltend
(a) ein amin-, polyolfunktionelles Siloxan mit einer mittleren allgemeinen Formel 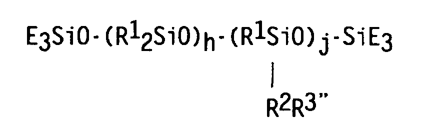 worin jedes E unabhängig voneinander ausgewählt ist aus einer einbindigen Kohlenwasserstoffgruppe, einer Hydroxylgruppe oder einer Alkoxygruppe, jedes R¹ unabhängig voneinander eine einbindige Kohlenwasserstoffgruppe ist, jedes R² unabhängig voneinander eine zweibindige Kohlenwasserstoffgruppe mit 1 bis 10 Kohlenstoffatomen ist, h gleich 25 bis 1000 ist, j gleich 0.1 bis 200 ist und jedes R^{3"} eine heterocyclische stickstoffhaltige Gruppe, enthaltend 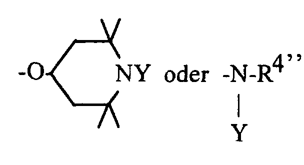 ist, worin jedes R^{4"} unabhängig voneinander ausgewählt ist aus einem Wasserstoffatom, einer einbindigen Kohlenwasserstoffgruppe oder einer Gruppe mit der Formel -R²NY₂, jedes Y unabhängig voneinander ein Wasserstoffatom oder Y' ist, unter der Voraussetzung, dass nicht alle Y = Wasserstoff sind und jedes Y' eine Gruppe der Formel 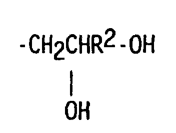 ist, und
(b) ein polyol-, amidfunktionelles Siloxan mit einer mittleren allgemeinen Formel 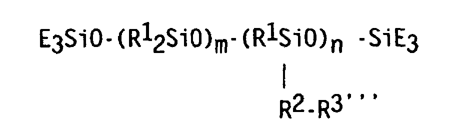
worin E, R¹ und R² wie oben beschrieben sind, m gleich 25 bis 1000 ist, n gleich 0,1 bis 100 ist und jedes R^{3"'} eine heterocyclische stickstoffhaltige Gruppe, enthaltend 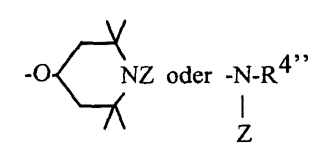 ist, worin jedes R^{4'"} unabhängig voneinander ausgewählt ist aus einem Wasserstoffatom oder einer Gruppe mit der Formel -R²NY₂, jedes Z aus einem Wasserstoffatom oder Z' ausgewählt ist, unter der Voraussetzung, dass nicht alle Z = Wasserstoff sind und Z' eine Gruppe der Formel 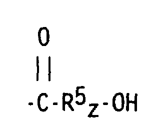 ist, worin jedes R⁵ eine zweibindige Kohlenwasserstoffgruppe mit 1 bis 7 Kohlenstoffatomen ist und z eine ganze Zahl von 1 bis 7 einschließlich ist, oder
(II) einem amin-, polyol-, amidfunktionellen Siloxancopolymer, wobei das Copolymer die mittlere allgemeine Formel: 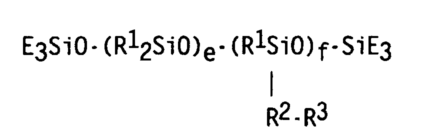 aufweist, worin jedes E unabhängig voneinander ausgewählt ist aus einbindigen Kohlenwasserstoffgruppen, Hydroxylgruppen oder Alkoxygruppen, jedes R¹ unabhängig voneinander eine einbindige Kohlenwasserstoffgruppe ist, jedes R² unabhängig voneinander eine zweibindige Kohlenwasserstoffgruppe mit 1 bis 10 Kohlenstoffatomen ist, jedes R³ eine heterocyclische stickstoffhaltige Gruppe, enthaltend 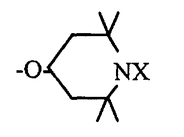 oder eine stickstoffhaltige Gruppe 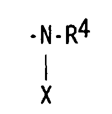 ist, worin jedes R⁴ unabhängig voneinander ausgewählt ist aus einem Wasserstoffatom, einem einbindigen Kohlenwasserstoff oder einer Gruppe mit der Formel -R²NY₂, worin jedes X unabhängig voneinander ein Wasserstoffatom oder X' ist, unter der Voraussetzung, dass nicht alle X = Wasserstoff sind, jedes X' unabhängig voneinander ausgewählt ist aus den Gruppen mit der Formel 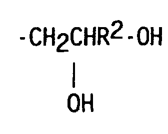 oder den Gruppen mit der Formel 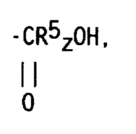 wobei wenigstens eine jeder der obigen X'-Alternativen vorhanden ist, wobei jedes R² wie oben beschrieben ist, jedes R⁵ unabhängig voneinander eine zweibindige Kohlenwasserstoffgruppe mit 1 bis 7 Kohlenstoffatomen ist, z eine ganze Zahl von 1 bis 7 ist, e gleich 25 bis 1000 ist und f gleich 0.1 bis 200 ist.
und (B) einen Träger.

2. Zusammensetzung nach Anspruch 1, wobei der Träger aus Wasser oder organischen Lösungsmitteln ausgewählt ist.

3. Zusammensetzung nach Anspruch 2, wobei die Zusammensetzung aus einer Dispersion oder einer Emulsion ausgewählt ist.

4. Zusammensetzung nach Anspruch 3, wobei die Zusammensetzung eine Emulsion ist, Bestandteil (B) Wasser ist und die Zusammensetzung zusätzlich als Bestandteil (C) ein oberflächenaktives Mittel enthält.

5. Zusammensetzung nach Anspruch 4, die weiterhin mehr als 0 bis 2 Gew.-%, bezogen auf das Gewicht der Emulsion, von Bestandteil (D), einer organischen Säure, enthält.

6. Zusammensetzung nach Anspruch 1, wobei der aktive Bestandteil (A) zusätzlich einen optionalen aktiven Bestandteil, ausgewählt aus (III) einer organischen Faserbehandlungsverbindung, (IV) einer Organosiloxanfaserbehandlungsverbindung oder Kombinationen davon, enthält.

7. Ein amin-, polyol-, amidfunktionelles Siloxancopolymer, wobei das Copolymer die mittlere allgemeine Formel: 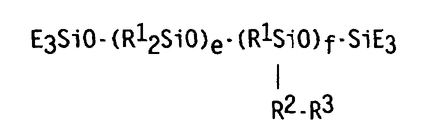 aufweist, worin jedes E unabhängig voneinander ausgewählt ist aus einbindigen Kohlenwasserstoffgruppen, Hydroxylgruppen oder Alkoxygruppen, jedes R¹ unabhängig voneinander eine einbindige Kohlenwasserstoffgruppe ist, jedes R² unabhängig voneinander eine zweibindige Kohlenwasserstoffgruppe mit 1 bis 10 Kohlenstoffatomen ist, jedes R³ eine heterocyclische stickstoffhaltige Gruppe, enthaltend 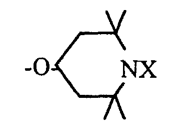 oder eine stickstoffhaltige Gruppe 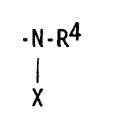 ist, worin jedes R⁴ unabhängig voneinander ausgewählt ist aus einem Wasserstoffatom, einem einbindigen Kohlenwasserstoff oder einer Gruppe mit der Formel -R²NY₂, worin jedes X unabhängig voneinander ein Wasserstoffatom oder X' ist, unter der Voraussetzung, dass nicht alle X = Wasserstoff sind, jedes X' unabhängig voneinander ausgewählt ist aus den Gruppen mit der Formel 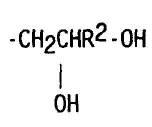 oder den Gruppen mit der Formel 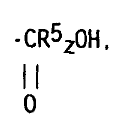 wobei wenigstens eine jeder der obigen X'-Alternativen vorhanden ist, wobei jedes R² wie oben beschrieben ist, jedes R⁵ unabhängig voneinander eine zweibindige Kohlenwasserstoffgruppe mit 1 bis 7 Kohlenstoffatomen ist, z eine ganze Zahl von 1 bis 7 ist, e gleich 25 bis 1000 ist und f gleich 0,1 bis 200 ist.

8. Copolymer nach Anspruch 7, wobei das Copolymer 0,1 bis 2,9 Mol-% von X- und X'-Gruppen der Formel 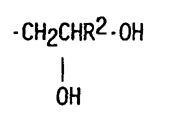 enthält.

9. Copolymer nach Anspruch 7, wobei das Copolymer 0,01 bis 2,9 Mol-% von X- und X'-Gruppen der Formel 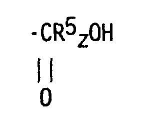 enthält.

10. Copolymer nach Anspruch 7, worin R¹ eine Alkylgruppe ist, R² eine Alkylengruppe ist, jedes X' unabhängig voneinander ausgewählt ist aus 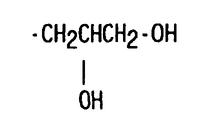 oder 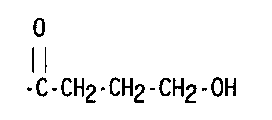 worin X ausgewählt ist aus Wasserstoff und X', e gleich 75 bis 400 ist und f gleich 0,75 bis 20 ist.

11. Verfahren zur Herstellung eines amin-, polyol-, amidfunktionellen Siloxancopolymers, wobei das Verfahren umfasst: Umsetzen
(i) eines aminfunktionellen Siloxans mit der mittleren allgemeinen Formel 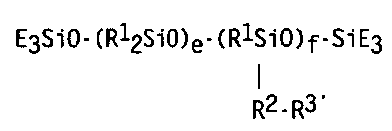 worin R¹ eine einbindige Kohlenwasserstoffgruppe ist, R² eine zweibindige Kohlenwasserstoffgruppe mit 1 bis 10 Kohlenstoffatomen ist, jedes E unabhängig voneinander ausgewählt ist aus einbindigen Kohlenwasserstoffgruppen, Hydroxylgruppen oder Alkoxygruppen, e gleich 25 bis 1000 ist und f gleich 0,1 bis 200 ist, R^{3'} eine heterocyclische stickstoffhaltige Gruppe, enthaltend 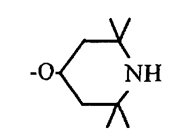 oder eine stickstoffhaltige Gruppe 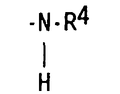 ist, worin jedes R^{4'} unabhängig voneinander ausgewählt ist aus einem Wasserstoffatom, einem einbindigen Kohlenwasserstoff oder einer Gruppe mit der Formel -R²NY₂, und
(ii) einer epoxyfunktionellen Verbindung der Formel 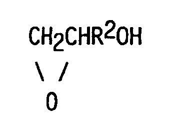 worin R² eine zweibindige Kohlenwasserstoffgruppe wie oben beschrieben ist, und
(iii) eines Stoffs, ausgewählt aus Lactonen.

12. Verfahren nach Anspruch 11, wobei Komponente (i) durch einen Basen-Äquilibrierungsprozess, umfassend:
1) Erwärmen einer Zusammensetzung, enthaltend ein Polydiorganosiloxan, Hexamethyldisiloxan, eine Aminverbindung, ausgewählt aus einem aminfunktionellen Silan oder einem aminfunktionellen Siloxan, und Wasser, in Gegenwart eines Katalysators und
2) Anwenden eines milden Strippens auf das Produkt aus Schritt 1), wobei Nebenprodukte, einschließlich Wasser und Alkohol, entfernt werden,
hergestellt wird.

13. Verfahren nach Anspruch 11, wobei Komponente (i) durch einen Kondensationsreaktionsprozess, umfassend:
I) Erwärmen einer Zusammensetzung, enthaltend ein silanolendblockiertes Polydimethylsiloxan, einen Alkohol und ein Aminosilan, in Gegenwart eines Katalysators und danach
II) graduelles Verringern des Druckes, um Kondensationspolymerisation durch Entfernen von Nebenprodukten aus der Reaktionsmischung zu fördern,
hergestellt wird.

14. Verfahren nach Anspruch 11, wobei
1) das aminfunktionelle Siloxan (i) mit der epoxyfunktionellen Verbindung (ii) umgesetzt wird, um dadurch ein amin-, polyolfunktionelles Siloxan zu erhalten, und danach
2) das amin-, polyolfunktionelle Siloxan mit (iii), dem Stoff, ausgewählt aus Lactonen, Anhydriden oder Carbonaten, umgesetzt wird.

15. Verfahren nach Anspruch 11, wobei (i) das aminfunktionelle Siloxan, (ii) die epoxyfunktionelle Verbindung und (iii) der Stoff, ausgewählt aus Lactonen, vereinigt und in einem Schritt umgesetzt werden.

16. Verfahren nach Anspruch 11, wobei
1) das aminfunktionelle Siloxan (i) mit dem Stoff (iii). ausgewählt aus Lactonen, umgesetzt wird, wodurch ein amin-, polyolfunktionelles Siloxan erhalten wird, und danach
2) das amin-, polyolfunktionelle Siloxan mit (ii), der epoxyfunktionellen Verbindung, umgesetzt wird.

17. Verfahren zur Herstellung einer Faserbehandlungszusammensetzung, wobei das Verfahren ausgewählt ist aus Auflösen, Dispergieren oder Emulgieren:
(I) einer Kombination, enthaltend
(a) ein amin-, polyolfunktionelles Siloxan wie in Anspruch 1 definiert und
(b) ein polyol-, amidfunktionelles Siloxan wie in Anspruch 1 definiert oder
(II) eines amin-, polyol-, amidfunktionellen Siloxancopolymers wie in Anspruch 1 definiert und
(B) eines Trägers,
unter den Voraussetzungen, dass, wenn die Zusammensetzung durch Emulgieren hergestellt wird, Bestandteil (B) Wasser ist und Bestandteil (C), ein oberflächenaktives Mittel, der Zusammensetzung zugesetzt wird.

18. Verfahren nach Anspruch 17, wobei der aktive Bestandteil (A) eine Kombination der Komponenten (a) und (b) ist, die Zusammensetzung eine Kombination aus (1) einem ersten Behandlungsmittel und (2) einem zweiten Behandlungsmittel enthält, wobei (1), das erste Behandlungsmittel, durch ein Verfahren, ausgewählt aus Auflösen, Dispergieren oder Emulgieren der Komponente (a) und des Bestandteils (B), hergestellt wird und (2), das zweite Behandlungsmittel, durch ein Verfahren, ausgewählt aus Auflösen, Dispergieren oder Emulgieren der Komponente (b) und des Bestandteils (B), hergestellt wird.

19. Verfahren zur Behandlung von Fasern, umfassend:
1) Aufbringen einer Faserbehandlungszusammensetzung nach einem der Ansprüche 1-6 auf eine Faser und danach
2) Entfernen des Trägers.

20. Verfahren nach Anspruch 19, wobei die Faserbehandlungszusammensetzung auf eine Faser in einer Menge aufgebracht wird, die ausreicht, um 0,1 bis 15 Gew.-% des aktiven Bestandteils (A) auf der Faser bereitzustellen.

21. Behandelte Faser, erhältlich nach dem Verfahren nach einem der Ansprüche 19 und 20.

## Revendications

1. Composition de traitement de fibre comprenant (A) un ingrédient actif choisi parmi :
(I) une combinaison comprenant
(a) un siloxane à fonctionnalité polyol, amine ayant une formule générale moyenne 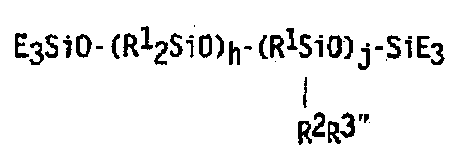 dans laquelle chaque E est indépendamment choisi parmi un groupe hydrocarboné monovalent, un groupe hydroxyle ou un groupe alcoxy ; chaque R¹ est indépendamment un groupe hydrocarboné monovalent ; chaque R² est indépendamment un groupe hydrocarboné divalent ayant 1 à 10 atomes de carbone ; h vaut de 5 à 1 000 ; j vaut de 0,1 à 200 ; et chaque R^{3"} est un groupe hétérocyclique contenant de l'azote comprenant 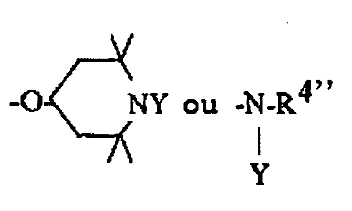 dans laquelle chaque R^{4''} est indépendamment choisi parmi un atome d'hydrogène, un groupe hydrocarboné monovalent ou un groupe de formule -R²NY₂, chaque Y est indépendamment un atome d'hydrogène ou Y', à condition que les Y ne soient pas tous un atome d'hydrogène, et chaque Y' est un groupe de formule 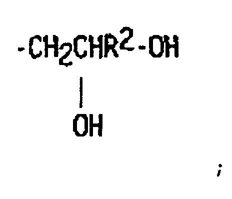 et
(b) un siloxane à fonctionnalité amide, polyol ayant une formule générale moyenne 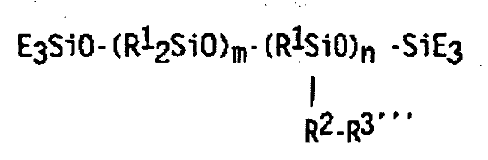
dans laquelle E, R¹ et R² sont comme décrits ci-dessus, m vaut de 25 à 1 000, n vaut de 0,1 à 100 ; et chaque R^{3'''} est un groupe hétérocyclique contenant de l'azote comprenant 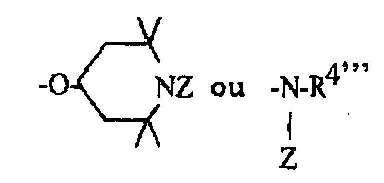 dans laquelle chaque R^{4"'} est indépendamment choisi parmi un atome d'hydrogène ou un groupe de formule -R²NZ₂, chaque Z est choisi parmi un atome d'hydrogène ou Z', à condition que les Z ne soient pas tous un atome d'hydrogène, et Z' est un groupe ayant une formule 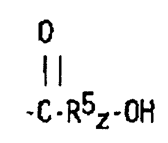 dans laquelle chaque R⁵ est un groupe hydrocarboné divalent de 1 à 7 atomes de carbone, et z est un entier de 1 à 7 inclus ; ou
(II) un copolymère à fonctionnalité amide, polyol, amine, dans lequel le copolymère a la formule générale moyenne : 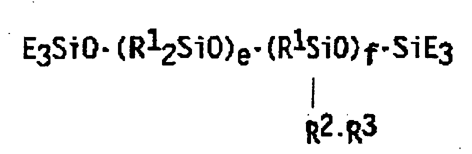 dans laquelle chaque E est indépendamment choisi parmi des groupes hydrocarbonés monovalents, des groupes hydroxyles ou des groupes alcoxy ; chaque R¹ est indépendamment un groupe hydrocarboné monovalent ; chaque R² est indépendamment un groupe hydrocarboné divalent ayant 1 à 10 atomes de carbone ; chaque R³ est un groupe hétérocyclique contenant de l'azote comprenant 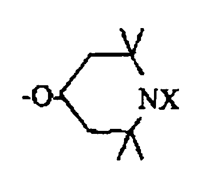 ou un groupe contenant de l'azote 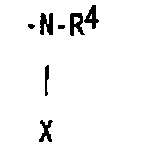 dans laquelle chaque R⁴ est indépendamment choisi parmi un atome d'hydrogène, un groupe hydrocarboné monovalent ou un groupe de formule ―R²NX₂, dans laquelle chaque X est indépendamment un atome d'hydrogène ou X', à condition que les X ne soient pas tous un atome d'hydrogène, et chaque X' est indépendamment choisi parmi les groupes de formule 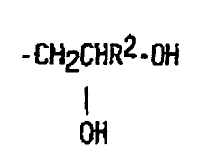 ou les groupes de formule 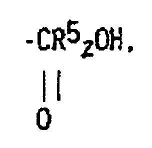 avec au moins un de chacun des X' possibles ci-dessus étant présent, dans laquelle chaque R² est comme décrit ci-dessus, dans laquelle chaque R⁵ est indépendamment un groupe hydrocarboné divalent de 1 à 7 atomes de carbone, z est un entier de 1 à 7 ; e vaut de 25 à 1 000 ; et f vaut de 0,1 à 200 ; et (B) est un véhicule.

2. Composition selon la revendication 1 dans laquelle le véhicule est choisi parmi l'eau ou les solvants organiques.

3. Composition selon la revendication 2 dans laquelle la composition est choisie parmi une dispersion ou une émulsion.

4. Composition selon la revendication 3 dans laquelle la composition est une émulsion, l'ingrédient (B) est l'eau, et la composition comprend de plus l'ingrédient (C), un agent tensioactif.

5. Composition selon la revendication 4 comprenant en outre plus de 0 à 2 % en poids, basé sur le poids de l'émulsion, de l'ingrédient (D), un acide organique.

6. Composition selon la revendication 1 dans laquelle l'ingrédient actif (A) comprend en outre un ingrédient actif optionnel choisi parmi (III) un composé organique de traitement de fibre, (IV) un composé de traitement de fibre à base d'organosiloxane ou une combinaison de ceux-ci.

7. Copolymère à fonctionnalité amide, polyol, amine, dans lequel le copolymère a la formule générale moyenne : 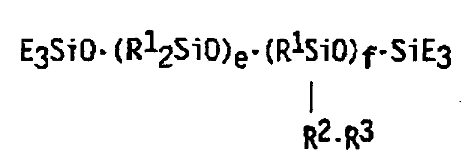 dans laquelle chaque E est indépendamment choisi parmi des groupes hydrocarbonés monovalents, des groupes hydroxyles ou des groupes alcoxy ; chaque R¹ est indépendamment un groupe hydrocarboné monovalent ; chaque R² est indépendamment un groupe hydrocarboné divalent ayant 1 à 10 atomes de carbone ; chaque R³ est un groupe hétérocyclique contenant de l'azote comprenant 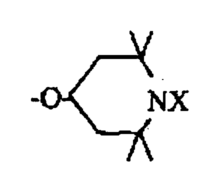 ou un groupe de contenant de l'azote 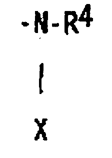 dans laquelle chaque R⁴ est indépendamment choisi parmi un atome d'hydrogène, un groupe hydrocarboné monovalent ou un groupe de formule -R²NX₂, dans laquelle chaque X est indépendamment un atome d'hydrogène ou X', à condition que tous les X ne soient pas l'atome d'hydrogène, et chaque X' est indépendamment choisi parmi les groupes de formule 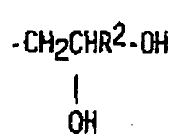 ou les groupes de formule 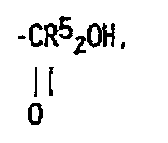 avec au moins un de chacun des X' possibles ci-dessus étant présent, dans laquelle chaque R² est comme décrit ci-dessus, chaque R⁵ est indépendamment un groupe hydrocarboné divalent de 1 à 7 atomes de carbone, z est un entier de 1 à 7 ; e vaut de 25 à 1 000 ; et f vaut de 0,1 à 200.

8. Copolymère selon la revendication 7 dans lequel le copolymère contient 0,1 à 2,9 % en mole des groupes X et X' de formule

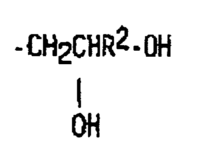

9. Copolymère selon la revendication 7 dans lequel le copolymère contient 0,01 à 2,9 % en mole des groupes X et X' de formule

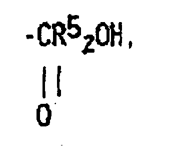

10. Copolymère selon la revendication 7 dans lequel R¹ est un groupe alkyle ; R² est un groupe alkylène ; chaque X' est choisi indépendamment parmi 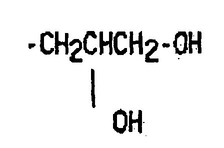 ou 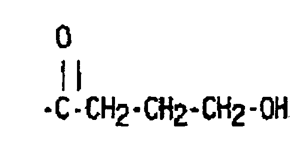 chaque X est choisi parmi l'hydrogène et X' ; e vaut de 75 à 400, et f vaut de 0,75 à 20.

11. Procédé pour préparer un copolymère à fonctionnalité amide, polyol, amine, dans lequel le procédé comprend de faire réagir :
(i) un siloxane à fonctionnalité amine de formule générale moyenne 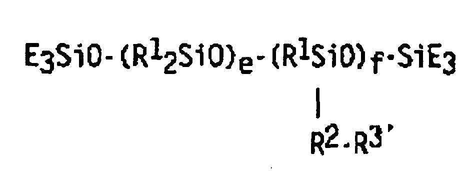 dans laquelle R¹ est un groupe hydrocarboné monovalent, R² est un groupe hydrocarboné divalent ayant 1 à 10 atomes de carbone, chaque E est indépendamment choisi parmi des groupes hydrocarbonés monovalents, des groupes hydroxyles ou des groupes alcoxy, e vaut de 25 à 1000, et f vaut de 0,1 à 200 ; R^{3'} est un groupe hétérocyclique contenant de l'azote comprenant 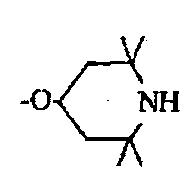 ou un groupe de contenant de l'azote 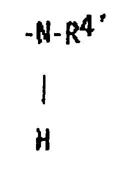 dans lequel chaque R⁴' est indépendamment choisi à partir d'un atome d'hydrogène, un hydrocarbure monovalent ou un groupe de formule -R²NH₂; et
(ii) un composé à fonctionnalité époxyde de formule 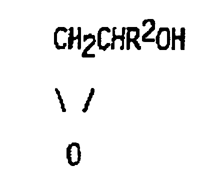 dans laquelle R² est un groupe hydrocarboné divalent comme il est décrit ci-dessus ; et
(iii) un matériau choisi parmi les lactones.

12. Procédé selon la revendication 11 dans lequel le composant (i) est préparé par un processus d'équilibre acide-base comprenant :
1) le chauffage d'une composition comprenant un polydiorganosiloxane, de l'hexaméthyldisiloxane, un composé amine choisi parmi un silane à fonctionnalité amine ou un siloxane à fonctionnalité amine, et de l'eau en présence d'un catalyseur ; et
2) en appliquant aux produits de l'étape 1) une légère extraction pour éliminer de cette façon des sous-produits comprenant l'eau et l'alcool.

13. Procédé selon la revendication 11 dans lequel le composant (i) est préparé par un processus réactionnel de condensation comprenant :
I) le chauffage d'un mélange comprenant un polydiméthylsiloxane à bloc terminal silanol, un alcool et un aminosilane en présence d'un catalyseur, et ensuite
II) la diminution graduelle de la pression afin de promouvoir la polymérisation par condensation en retirant les sous-produits du mélange réactionnel.

14. Procédé selon la revendication 11 dans lequel
1) le siloxane à fonctionnalité amine (i) réagit avec le composé à fonctionnalité époxyde (ii) produisant de cette façon un siloxane à fonctionnalité polyol, amine ; et par la suite
2) le siloxane à fonctionnalité polyol, amine réagit avec (iii) le matériau choisi parmi des lactones, anhydrides ou carbonates.

15. Procédé selon la revendication 11 dans lequel (i) le siloxane à fonctionnalité amine, (ii) le composé à fonctionnalité époxyde, et (iii) le matériau choisi parmi les lactones sont combinés et réagissent ensemble en une étape.

16. Procédé selon la revendication 11 dans lequel
1) le siloxane à fonctionnalité amine (i) réagit avec le matériau choisi parmi les lactones (iii) produisant de cette façon un siloxane à fonctionnalité polyol, amine ; et par la suite
2) le siloxane à fonctionnalité polyol, amine réagit avec (ii) le composé à fonctionnalité époxyde.

17. Procédé pour fabriquer une composition de traitement de fibre, dans lequel le procédé est choisi parmi les procédés de dissolution, de dispersion ou de mise en émulsion de :
(I) une combinaison comprenant
(a) un siloxane à fonctionnalité polyol, amine comme il est défini dans la revendication 1 et
(b) un siloxane à fonctionnalité amide, polyol comme il est défini dans la revendication 1 ou
(II) un copolymère à fonctionnalité amide, polyol, amine comme il est défini dans la revendication 1 :
et (B) un support ; à la condition que l'ingrédient (B) soit l'eau, et que l'ingrédient (C), un agent tensioactif, soit ajouté à la composition quand celle-ci est préparée par une mise en émulsion.

18. Procédé selon la revendication 17 dans lequel l'ingrédient actif (A) est une combinaison des composants (a) et (b) ; la composition comprend une combinaison de (1) un premier agent de traitement et de (2) un second agent de traitement, dans lequel (1) le premier agent de traitement est préparé par un procédé choisi parmi la dissolution, la dispersion ou la mise en émulsion du composant (a) et de l'ingrédient (B), et (2) le deuxième agent de traitement est préparé par un procédé choisi parmi la dissolution, la dispersion ou la mise en émulsion du composant (b) et de l'ingrédient (B).

19. Procédé pour traiter des fibres comprenant :
1) l'application sur une fibre, d'une composition de traitement de fibre selon l'une quelconque des revendications de 1 à 6, et par la suite
2) le retrait du support.

20. Procédé selon la revendication 19 dans lequel la composition de traitement de fibre est appliquée à une fibre en quantité suffisante pour fournir sur la fibre 0,1 à 15 % de l'ingrédient actif (A).

21. Une fibre traitée obtenue par le procédé selon l'une quelconque des revendications 19 et 20.
